# EUROPEAN PATENT SPECIFICATION

(11) **EP 2 940 335 B1**
(45) Date of publication and mention of the grant of the patent: **29.05.2019**
(21) Application number: 13869626.5
(22) Date of filing: 25.12.2013
(51) Int. Cl.: F16D 13/70, F16D 13/62, F16D 25/0638, F16D 25/064

(54) **MULTI-PLATE CLUTCH DEVICE**
MEHRPLATTEN-KUPPLUNGSVORRICHTUNG
DISPOSITIF D'EMBRAYAGE À PLATEAUX MULTIPLES

(30) Priority: 27.12.2012 JP 2012286016
(43) Date of publication of application: 04.11.2015
(73) Proprietor: Kabushiki Kaisha F.C.C., Hamamatsu-shi, Shizuoka 431-1394 (JP)
(72) Inventor: KISHIMOTO, Naoki, Hamamatsu-shi Shizuoka 431-1304 (JP); OISHI, Hideyuki, Hamamatsu-shi Shizuoka 431-1304 (JP); FURUHASHI, Shinji, Hamamatsu-shi Shizuoka 431-1304 (JP)
(74) Representative: Cohausz & Florack
(86) International application number: PCT/JP2013/084670
(87) International publication number: WO 2014/104097

(56) References cited:
- EP-A1- 1 234 993
- JP-A- 2001 234 946
- JP-A- 2011 174 597
- JP-A- 2011 174 597
- JP-A- 2012 229 765

## Description

### Field of the Invention

The present invention relates to a multiple disc clutch apparatus which can transmit a power from an engine to a wheel or wheels when clutch discs and clutch plates are press-contacted each other via the frictional members and can block the power transmission between the engine and the wheel (or wheels) when the press-contacting force is released.

### Description of Background Art

In general, the multi disc clutch apparatus for vehicles such as a motorcycle is intended to arbitrarily perform transmission or blocking of the driving power of an engine to or from a driving wheel and comprises substantially annular multiple clutch discs to be connected to an input-side from an engine and substantially annular multiple clutch plates to be alternately laminated with the clutch discs and connected to an output-side to a wheel. Frictional members formed e.g. of cork material are secured on surfaces of the clutch discs opposing to the clutch plates and adapted to transmit the power between the engine-side and the wheel-side by press-contacting the clutch discs with the clutch plates via the frictional members and block the power transmission by releasing the press-contacting force.

As disclosed in e.g. Patent Document 1 below, it has been proposed a multiple disc clutch apparatus of the prior art in which radially extending grooves are formed on each clutch disc at portions near the frictional members. According to this prior art, since inside oil can be discharged outside through the radially extending grooves when the clutch discs and the clutch plates are relatively rotated, it is possible to reduce the drag torque which would be caused by the viscous resistance of oil remained between the clutch discs and the clutch plates when they are separated by releasing the press-contacting force.

### Documents of Prior Art

### Patent Document

Patent Document 1: JP 03-146018 A

Patent documents JP 2011 174597 A and EP 1 234 993 A, disclose multiple disc clutches.

### Disclosure of the Invention

### Problems to be solved by the Invention

In this multiple disc clutch apparatus of the prior art, the provision of the radially extending grooves can somewhat contribute reduction of the drag torque, however it is required to further improve the oil discharging effect between the clutch discs and clutch plates in order to further reduce the drag torque. In addition to the reduction of the drag torque, it has been desired to reduce the sticking torque caused just before the relative rotation of the clutch discs and the clutch plates as well as to reduce the weight of the multiple disc clutch apparatus.

It is, therefore, an object of the present invention to provide a multiple disc clutch apparatus which can reduce both the drag torque and the sticking torque and simultaneously reduce the weight of the multiple disc clutch apparatus.

### Means for achieving the Object

For achieving the object of the present invention above, there is provided, according to claim 1, a multiple disc clutch apparatus comprising substantially annular multiple clutch discs to be connected to an input-side from an engine; substantially annular multiple clutch plates to be alternately laminated with the clutch discs and connected to an output-side to a wheel; and frictional members secured on surfaces of the clutch discs opposing to the clutch plates and adapted to be capable of press-contacting with or separating from the clutch plates; a power from the engine being transmitted to the wheel when the clutch discs and the clutch plates are press-contacted each other via the frictional members and the power transmission between the engine and the wheel being blocked by releasing the press-contacting force characterized in that depressions are formed on each clutch plate extending along its periphery and toward radially inward; and that a part of the frictional members is positioned within a region of the depressions.

The invention of claim 2 is a multiple disc clutch apparatus of claim 1 wherein each of the depressions has a configuration of a curved notch.

The invention of claim 3 is a multiple disc clutch apparatus of claim 1 or 2 wherein the depressions are multiple notches arranged equidistantly along the whole periphery of the clutch plate.

The invention of claim 4 is a multiple disc clutch apparatus of any one of claims 1∼3 wherein the frictional members comprise multiple rectangular members secured on surfaces of the clutch discs opposing to the clutch plates separately from each other at a predetermined distance so as to discharge oil between the clutch disc and the clutch plate through separated spaces between the frictional members.

### Effects of the Invention

According to the present inventions of claims 1, since depressions are formed on each clutch plate extending along its periphery and toward radially inward, and a part of the frictional members is positioned within a region of the depressions, it is possible to further reduce both the drag torque and the sticking torque and simultaneously reduce the weight of the multiple disc clutch apparatus as compared with multiple disc clutch apparatus of the prior art.

According to the present invention of claim 2, since each of the depressions has a configuration of a curved notch, it is possible to prevent the frictional members from being caught in edges of the depressions when the clutch discs and the clutch plates are relatively rotated and thus perform smooth relative rotation of them.

According to the present invention of claim 3, since the depressions are multiple notches arranged equidistantly along the whole periphery of the clutch plate, it is possible to discharge larger amount of oil between the clutch discs and the clutch plates and to maintain better circumferential weight balance of the clutch plates and thus to stably rotate the clutch plates.

According to the present invention of claim 4, since the frictional members comprise multiple rectangular members secured on surfaces of the clutch discs opposing to the clutch plates separately from each other at a predetermined distance so as to discharge oil between the clutch disc and the clutch plate through separated spaces between the frictional members, it is possible to discharge larger amount of oil through separated spaces between the frictional members cooperating with the oil discharging effect of the depressions and thus to further reduce the drag torque and the sticking torque.

### Brief Description of the Drawings

[Fig. 1] A longitudinal section view of a multiple disc clutch apparatus according to the present invention;
[Fig. 2] A plan view showing a clutch disc of the multiple disc clutch apparatus of Fig. 1;
[Fig. 3] A plan view showing a clutch plate of the multiple disc clutch apparatus of Fig. 1;
[Fig. 4] A plan view showing a stacked condition of the clutch disc and the clutch plate of the multiple disc clutch apparatus of Fig. 1;
[Fig. 5] A graph showing experimental results exhibiting technical superiorities of the multiple disc clutch apparatus of Fig. 1;
[Fig. 6] A plan view showing one modification of the clutch plate of Fig. 3;
[Fig. 7] A plan view showing a stacked condition of the clutch disc and the clutch plate of Fig. 6;
[Fig.8] A plan view showing a clutch plate of another modification of Fig. 6; and
[Fig. 9] A plan view showing a stacked condition of the clutch disc and the clutch plate of Fig. 8.

### Modes for carrying out the Invention

Preferable embodiments of the present invention will be hereinafter described with reference to the accompanying drawings.

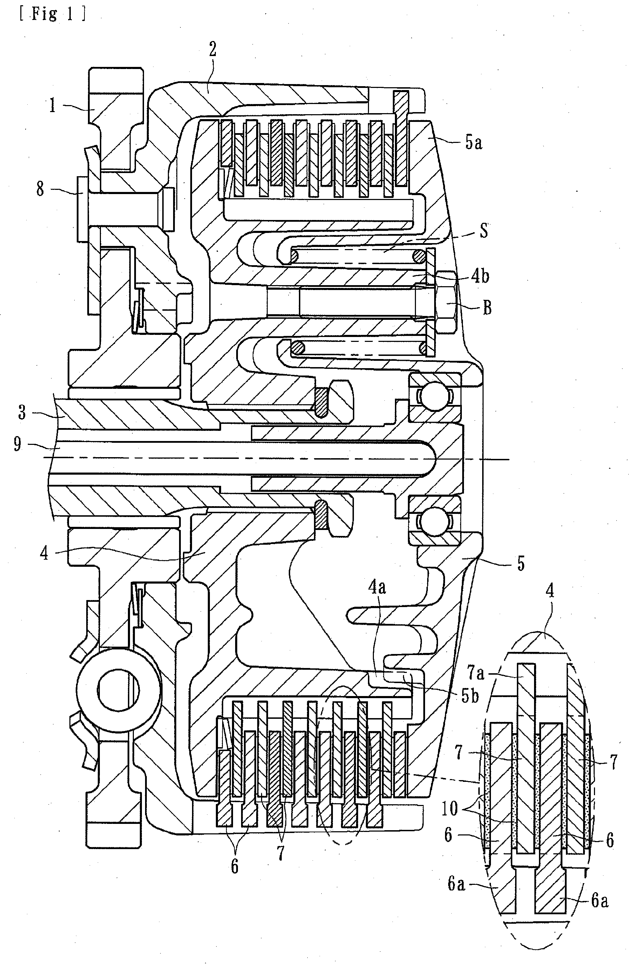

A multiple disc clutch apparatus of the present invention is mounted on a vehicle such as a motorcycle to arbitrarily transmit or block the driving power of an engine or a transmission to or from a wheel (driving wheel). As shown in Fig. 1, the multiple disc clutch apparatus mainly comprises a clutch housing 2 forming an input-side from the engine on which a gear 1 is mounted, a clutch member 4 forming an output-side to the wheel and connected to a shaft 3, a presser 5 mounted on the left end (Fig. 1) of the clutch member 4, clutch discs 6 mounted on the clutch housing 2, and clutch plates 7 mounted on the clutch member 4

The gear 1 is connected to the clutch housing 2 via rivets 8 etc. and can be rotated around the shaft 3 when driving power (rotational power) from the engine is inputted thereto. The clutch housing 2 is formed as a cylindrical casing opened at its right end (Fig.1) and multiple clutch discs 6 are mounted on the inner circumference of the clutch housing 2. Each of the clutch discs 6 comprises a substantially annular metal plate and adapted to be spline engaged with the clutch housing 2 via projections 6a formed the outer circumference of the clutch discs 6 and splines formed on the clutch housing 2. This enables the clutch discs 6 to rotate together with the clutch housing 2 and to slide axially therealong.

The clutch member 4 comprises a cylindrical casing member opened at its right side (Fig. 1) and adapted to be contained in the clutch housing 2. The shaft 3 is passed through the center of the clutch member 4 and connected thereto via spline fitting so as to be rotated together with the clutch member 4. The outer circumference of the clutch member 4 is formed with axially extending splines on which the clutch plates 7 are fitted.

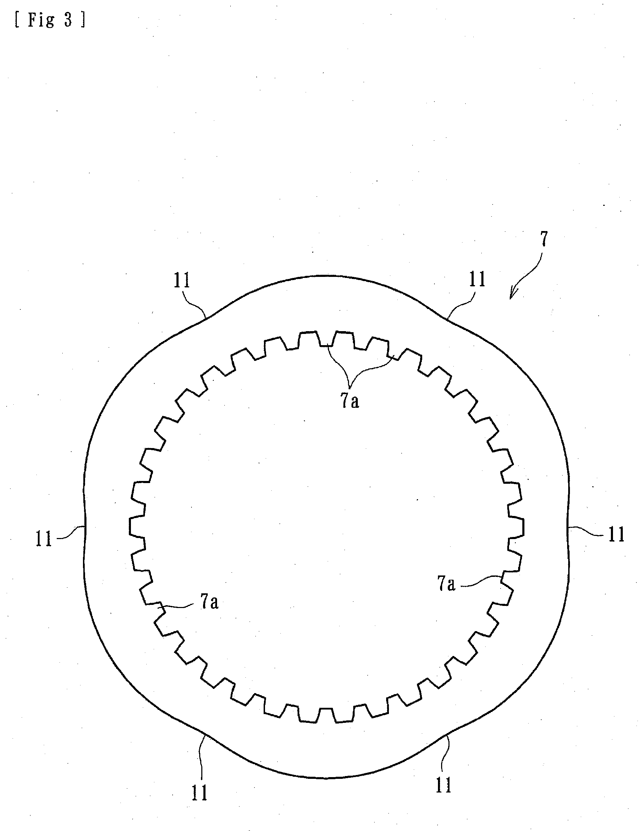

These clutch plates 7 are alternately laminated with the clutch discs 6 so that adjacent plates 7 and discs 6 can be press-contacted and separated each other. As shown in Fig. 3, each of the clutch plates 7 comprises a substantially annular metal sheet corresponding to the configuration of the clutch discs 6 and is formed with multiple projections 7a its inner circumference adapted to be spline fitted with the splines of the clutch member 4. This enables the clutch plates 7 to rotate together with the clutch member 4 and to slide axially therealong.

That is, the clutch discs 6 and the clutch plates 7 can be slid along the clutch housing 2 and the clutch member 4 respectively and thus can transmit the driving power of the clutch housing 2 to the clutch member 4 and the shaft 3 when they are press-contacted each other by the presser 5. On the contrary, the transmission of the driving power of the clutch housing 2 to the shaft 3 can be blocked when pressing force of the presser 5 is released.

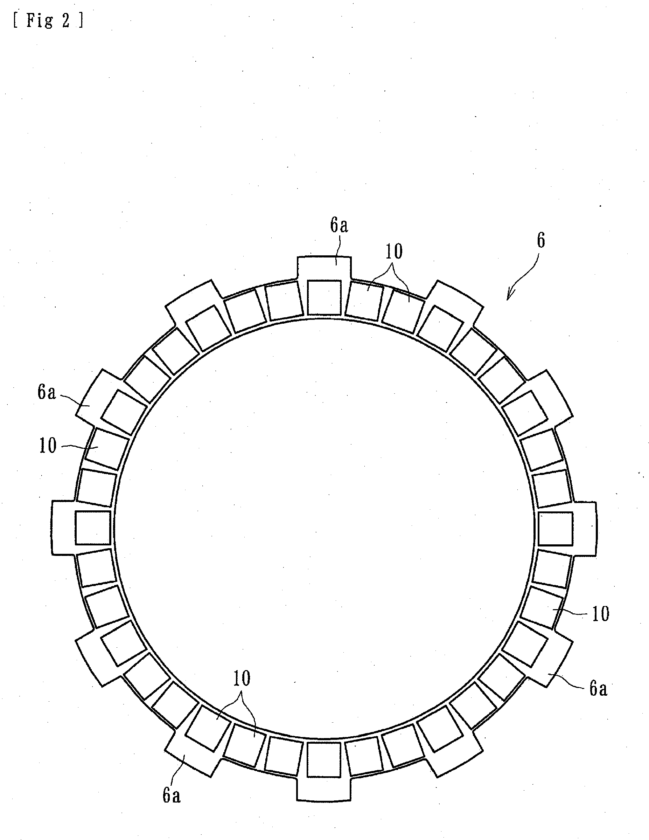

As shown in Fig. 2, frictional members 10 having a large frictional resistance such as cork material etc. are secured on surfaces (both surfaces) of the clutch discs 6 opposing to the clutch plates 7. According to the present invention, the frictional members 10 comprise multiple rectangular members secured on surfaces of the clutch discs 6 opposing to the clutch plates 7 separately from each other at a predetermined distance so as to discharge oil between the clutch disc 6 and the clutch plate 7 through separated spaces between the frictional members 10. The driving power can be transmitted between the engine and the wheel (or wheels) by the press-contact between the clutch discs 6 and the clutch plates 7 via the frictional members 10 and can be blocked between the engine and the wheel (or wheels) when the press-contacting force is released.

In this specification, the term "separation" of the clutch discs 6 and the clutch plates 7 does not necessarily mean a condition whether any clearance is caused between them. Accordingly, it includes a condition in which the clutch member 4 cannot follow the rotation of the clutch housing 2 e.g. due to slippage between the clutch discs 6 and the clutch plates 7.

The presser 5 has a substantially disc-shaped configuration adapted to close an opening (the right end in Fig. 1) of the clutch member 4 and is normally urged toward the left (Fig. 1) by clutch springs S. That is, the presser 5 is normally urged toward the left by clutch springs S interposed between hollow bosses 4b of the clutch member 4 and heads of clutch bolts B screwed in the bosses 4b.

In addition, the peripheral part 5a of the presser 5 abuts against the most right part (Fig. 1) of the lamination of the clutch discs 6 and the clutch plates 7 and press-contacts them each other by the urging force of the clutch springs S. Thus, the clutch housings 2 and the clutch member 4 are kept in normally connected condition so that the shaft 3 can be rotated whenever the rotational power is inputted to the gear 1.

An axially extending push rod 9 is inserted into the hollow shaft 3 so that the push rod 9 can shift the presser 5 toward the right (Fig. 1) against the urging force of the clutch springs S by operating an operating means (not shown). When the presser 5 is shifted toward the right (Fig. 1), the press-contacting force between the clutch discs 6 and the clutch plate 7 is released and thus the rotational power inputted to the gear 1 and the clutch housing 2 is blocked. That is, the presser 5 is structured so that it can press-contact and release the clutch discs 6 and clutch plates 7 each other due to its axially movement relative to the clutch member 4.

The presser 5 is integrally formed with a projected stopper 5b for limit rotation of the presser 5 relative to the clutch member 4. The stopper 5b extends from the presser 5 toward the left (Fig. 1) and is fitted into a recess 4a formed on the inner circumferential wall of the clutch member 4 to limit relative rotation between the presser 5 and the clutch member 4.

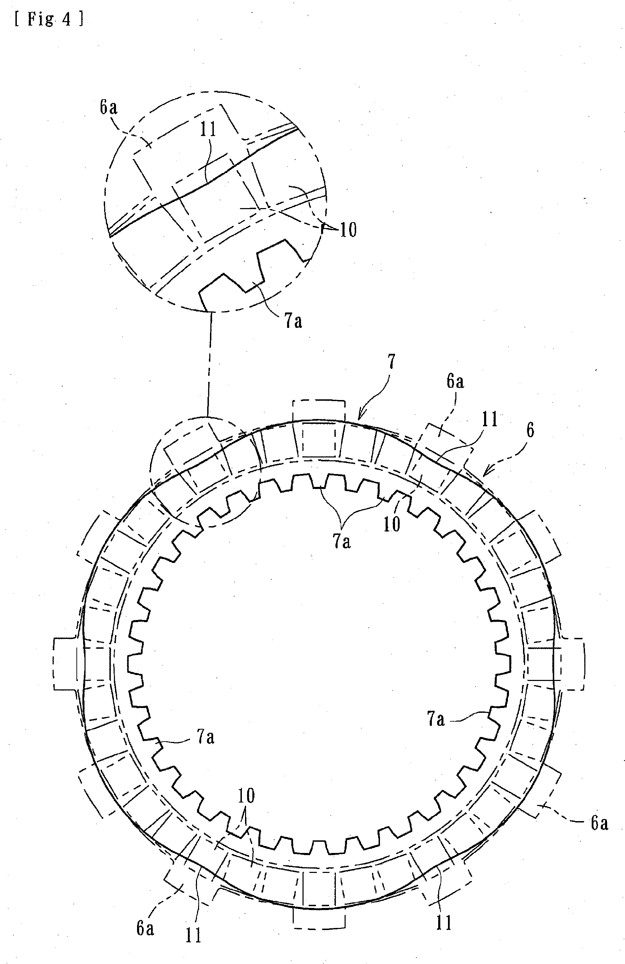

As shown in Figs. 3 and 4, each of the clutch plates 7 is formed with depressions 11 extending along its periphery and toward radially inward and a part of the frictional members 10 is positioned within a region of the depressions 11 under a condition in which the clutch disc 6 is stacked on (e.g., at interleaved with, alternatively laminated with) the clutch plate 7 (e.g., at least a portion of at least one frictional member 10 can overlap at least a portion of one or more depressions 11 in a radial direction with respect to the shaft 3). In Fig. 4, it is shown that the frictional members 10 are exposed through the depression 11. The clutch plates 7 may be formed by punching out metal sheets (blank members) to a configuration shown in Fig. 3.

Accordingly, relatively large spaces including parts of the frictional members 10 can be formed at portions of the depressions 11 between the stacked clutch discs 6 and clutch plates 7 and thus oil caught between them can be more easily discharged outside. Accordingly, since much more oil can be discharged outside through the spaces including depressions 11 before and during the clutch discs 6 and the clutch plates 7 are relatively rotated each other, it is possible to more effectively reduce the drag torque and the sticking torque. Additionally, provision of the depressions 11 contributes reduction of weight of the clutch plates 7 and thus the multiple disc clutch apparatus since depressions are formed by cutting out the clutch plate 7 along the periphery and toward radially inward of the clutch plate 7.

Each of the depressions 11 has a configuration of a curved notch (configuration of a continuous curved line having various radii of curvature in the plan view of the clutch plate 7). The depressions 11 of curved notches enable to prevent the frictional members 10 from being caught by the depressions and to achieve smooth rotation of the clutch discs 6 and the clutch plates 7 when the clutch disc 6 and the clutch plate 7 are relatively rotated.

In addition, according to the present invention since the depressions 11 are multiple notches (six notches in the illustrated example) arranged equidistantly along the whole periphery of the clutch plate 7, it is possible to discharge more amount of oil and maintain good circumferential weight balance of the clutch plates 7 for stable rotation thereof. Increase of the number of the notches i.e. depressions 11 contributes reduction of the weight of the clutch plates 7 and thus the multiple disc clutch apparatus since the overall weight is reduced by the weight of cut-out regions.

Then, results of a following experiment will be described for approving the technological superiorities of the multiple disc clutch apparatus of the present invention.
Firstly, prepared as a sample of the present invention, clutch plates in which multiple depressions 11 are formed along the whole periphery of each clutch plate, and as a comparative sample, clutch plates each having a substantially annular configuration. Then, clutch discs were stacked respectively with the clutch plates of the present invention and those of the comparative sample, press-contacted each other and integrally rotated and finally relatively rotated after having released the press-contacting force.

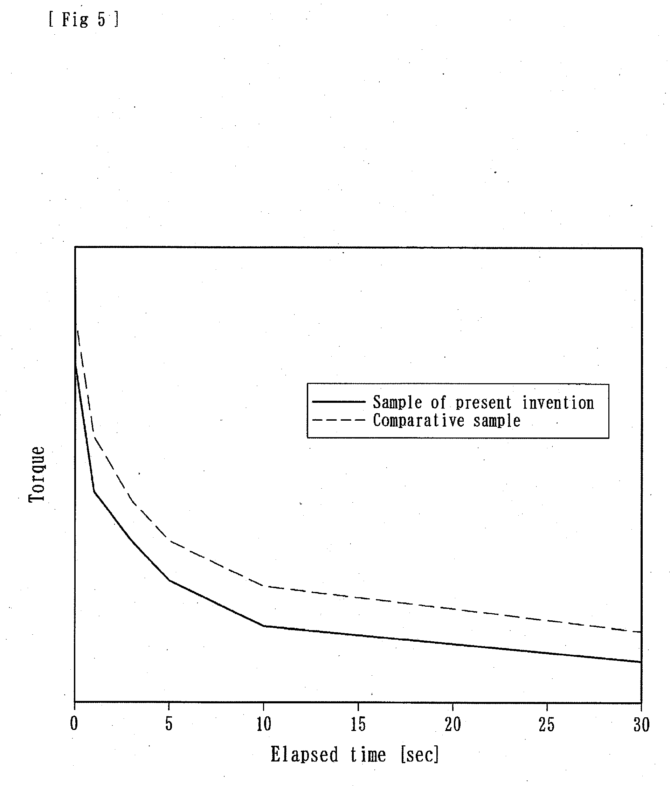

Results of the experiment is shown in a graph of Fig. 5 in which the axis of abscissa shows an elapsed time (sec) from a point of time in which the press-contacting force (i.e. point of time just before the relative rotation of the clutch discs and the clutch plates) is released, and the axis of ordinate shows a torque between the clutch discs and the clutch plates. As can be seen from this graph, the torque at the elapsed point of time (=0) (i.e. sticking torque) as well as the torque at the elapsed point of predetermined time (i.e. drag torque) of the sample of the present invention are lower than those of the comparative sample. It can be supposed that the provision of the depressions 11 on the clutch plates 7 of the sample of the present invention enables formation of relatively large space relative to adjacent clutch discs 6 and thus larger amount of oil can be discharged outside than that of the comparative sample.

As described above, according to the present invention, since depressions 11 are formed on each clutch plate 7 extending along its periphery and toward radially inward and a part of the frictional members 10 is positioned within a region of the depressions 11, it is possible to reduce both the drag torque and the sticking torque and simultaneously reduce the weight of the multiple disc clutch apparatus.

More particularly, since the frictional members 10 comprise multiple rectangular members secured on surfaces of the clutch discs 6 opposing to the clutch plates 7 separately from each other at a predetermined distance so as to discharge oil between the clutch disc 6 and the clutch plate 7 through separated spaces between the frictional members 10, it is possible to discharge larger amount of oil through separated spaces between the frictional members cooperating with the oil discharging effect of the depressions 11 and thus to further reduce the drag torque and the sticking torque.

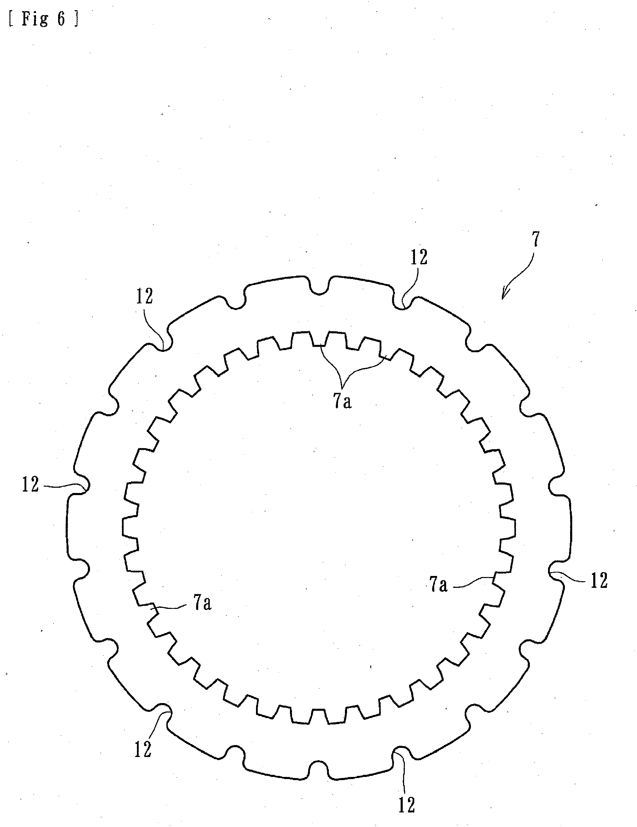

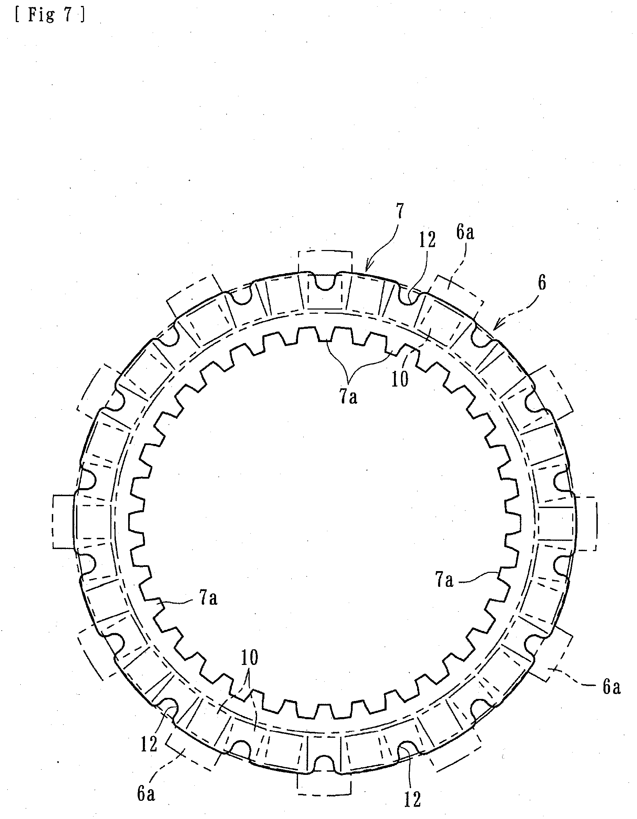

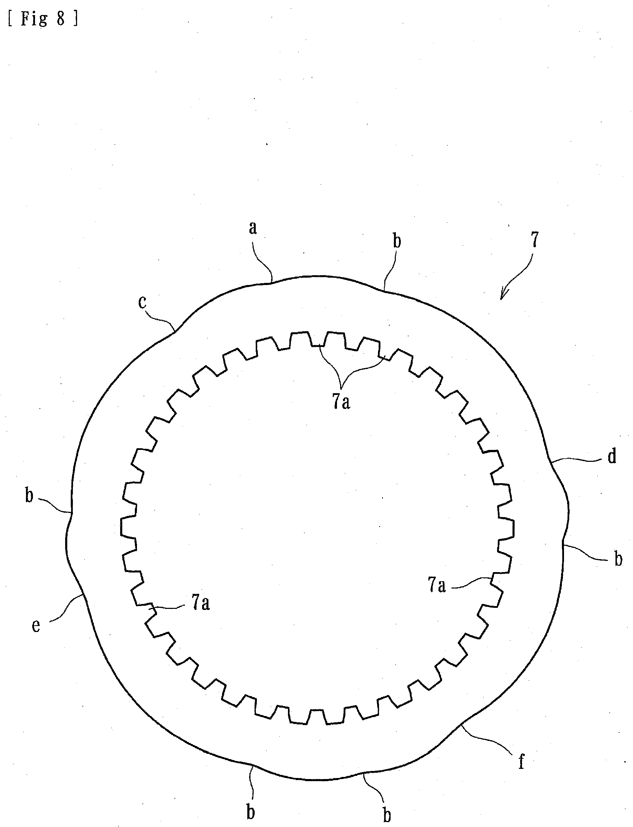

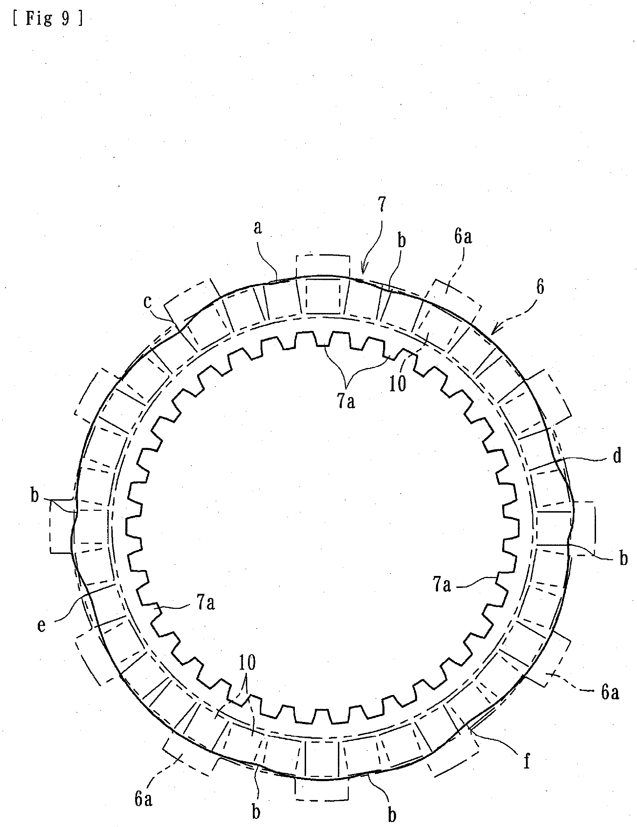

The present invention has been described with reference to the preferred embodiment described above. However, the present invention is not limited to the illustrated and described embodiments and other modifications can be adopted with respect to the depressions 11 formed on the clutch plate 7. For example it is possible to form substantially circular arc shaped depression 12 (Figs. 6 and 7) or multiple depression a∼f having different radii of curvature on each clutch plate 7 which extends along its periphery and toward radially inward so that a part of the frictional members 10 is positioned within a region of the depressions 12 or a∼f (Figs. 8 and 9).

Although the depressions 11,12, a∼f described above are formed by curved notches, depressions having other configurations such as e.g. rectangular etc. may be possible. In addition, although it is shown that six depressions 11 are arranged equidistantly along the periphery of the clutch plate 7, arbitral number of the depressions such as 1∼5 or 7 or more may be selected and the spacing of the depressions may be not equidistant.

Furthermore, although it has been described that the frictional members 10 are formed of rectangular cork material and secured on surfaces of the clutch discs 6 opposing to the clutch plates 7 separately from each other at a predetermined distance, the frictional members may be annular and formed of other material than cork. In addition, the multiple disc clutch apparatus can be applied to vehicles other than two-wheel motorcycles e.g. three- or four-wheeled buggies, or general purpose machines using a multiple disc clutch apparatus.

### Applicability in Industries

The multiple disc clutch apparatus of the present invention can be applied to those having clutch plates in which depressions are formed on the periphery of the clutch plates and a part of the frictional members is positioned within a region of the depressions when the clutch discs are stacked with the clutch plates, even if appearance shape is different from the illustrated embodiment or other functions are added to the illustrated embodiment.

### Description of Reference Numerals

- 1: gear
- 2: clutch housing
- 3: shaft
- 4: clutch member
- 4a: depression
- 5: presser
- 5b: projected stopper
- 6: clutch disc
- 7: clutch plate
- 8: rivet
- 9: push rod
- 10: frictional member
- 11, 12: depression

## Claims

1. A multiple disc clutch apparatus comprising:
substantially annular multiple clutch discs (6) to be connected to an input-side from an engine;
substantially annular multiple clutch plates (7) to be alternately laminated with the clutch discs (6) and connected to an output-side to a wheel; and
frictional members (10) secured on surfaces of the clutch discs (6) opposing to the clutch plates (7) and adapted to be capable of press-contacting with or separating from the clutch plates (7);
a power from the engine being transmitted to the wheel when the clutch discs (6) and the clutch plates (7) are press-contacted each other via the frictional members (10) and the power transmission between the engine and the wheel being blocked by releasing the press-contacting force; and
depressions (11, 12 or a∼f) are formed on each clutch plate (7) extending along its periphery and toward radially inward; **characterized in that**,
a part of the frictional members (10) is positioned within a region of the depressions (11, 12 or a∼f), under the condition in which the clutch plates are alternately laminated with the clutch discs.

2. A multiple disc clutch apparatus of claim 1 wherein each of the depressions (11, 12 or a∼f) has a configuration of a curved notch.

3. A multiple disc clutch apparatus of claim 1 or 2 wherein the depressions (11, 12) are multiple notches arranged equidistantly along the whole periphery of the clutch plate (7).

4. A multiple disc clutch apparatus of any one of claims 1∼3 wherein the frictional members (10) comprise multiple rectangular members secured on surfaces of the clutch discs (6) opposing to the clutch plates (7) separately from each other at a predetermined distance so as to discharge oil between the clutch disc (6) and the clutch plate (7) through separated spaces between the frictional members (10).

## Patentansprüche

1. Mehrscheibenkupplungsvorrichtung, umfassend:
mehrere im Wesentlichen ringförmige Kupplungsscheiben (6), die dafür vorgesehen sind, mit einer von einem Motor kommenden Antriebsseite verbunden zu sein;
mehrere im Wesentlichen ringförmige Kupplungsplatten (7), die dafür vorgesehen sind, mit den Kupplungsscheiben (6) abwechselnd geschichtet und mit einer zu einem Rad führenden Abtriebsseite verbunden zu sein; und
Reibungselemente (10), die auf den Kupplungsplatten (7) gegenüberliegenden Flächen der Kupplungsscheiben (6) gesichert und so ausgelegt sind, dass sie in der Lage sind, mit den Kupplungsplatten (7) in Druckkontakt zu treten oder sich von diesen zu lösen;
wobei eine Leistung vom Motor auf das Rad übertragen wird, wenn die Kupplungsscheiben (6) und die Kupplungsplatten (7) miteinander über die Reibungselemente (10) in Druckkontakt stehen, und die Leistungsübertragung zwischen dem Motor und dem Rad durch Lösen der Druckkontaktkraft blockiert wird;
und auf jeder Kupplungsplatte (7) Vertiefungen (11, 12 oder a∼f) gebildet sind, die sich entlang deren Umfang und radial nach innen erstrecken;
**dadurch gekennzeichnet, dass**
in dem Zustand, in dem die Kupplungsplatten mit den Kupplungsscheiben abwechselnd geschichtet sind, ein Teil der Reibungselemente (10) innerhalb eines Bereichs der Vertiefungen (11, 12 oder a∼f) positioniert ist.

2. Mehrscheibenkupplungsvorrichtung nach Anspruch 1, wobei jede der Vertiefungen (11, 12 oder a∼f) als bogenförmige Einkerbung ausgebildet ist.

3. Mehrscheibenkupplungsvorrichtung nach Anspruch 1 oder 2, wobei es sich bei den Vertiefungen (11, 12) um mehrere Einkerbungen handelt, die entlang des gesamten Umfangs der Kupplungsplatte (7) gleichmäßig beabstandet sind.

4. Mehrscheibenkupplungsvorrichtung nach einem der Ansprüche 1 bis 3, wobei die Reibungselemente (10) mehrere rechteckige Elemente umfassen, die auf den Kupplungsplatten (7) gegenüberliegenden Flächen der Kupplungsscheiben (6) um eine vorab bestimmte Distanz voneinander getrennt gesichert sind, um Öl zwischen der Kupplungsscheibe (6) und der Kupplungsplatte (7) durch getrennte Zwischenräume zwischen den Reibungselementen (10) abzuführen.

## Revendications

1. Embrayage multidisque comprenant :
plusieurs disques d'embrayage (6) sensiblement annulaires destinés à être connectés à un côté entrée depuis un moteur ;
plusieurs plaques d'embrayage (7) sensiblement annulaires, disposées en alternance avec les disques d'embrayage (6) et connectées à un côté sortie vers une roue, et
des éléments de frottement (10) fixés sur les faces des disques d'embrayage (6) opposées aux plaques d'embrayage (7) et destinés à pouvoir être pressés-mis en contact avec ou séparés des plaques d'embrayage (7) ;
la puissance du moteur étant transférée à la roue lorsque les disques d'embrayage (6) et les plaques d'embrayage (7) sont pressés-mis en contact les uns avec les autres via les éléments de frottement (10) et la transmission de puissance entre le moteur et la roue étant bloquée lors de la libération de la force de pression-contact ; et
des dépressions (11, 12 ou a-f) sont formées sur chaque plaque d'embrayage (7), s'étendent le long de leur périphérique et radialement vers l'intérieur ;
**caractérisé en ce qu'**une partie des éléments de frottement (10) est positionnée dans la région des dépressions (11, 12 ou a-f), dans l'état où les plaques d'embrayage (7) sont agencées en alternance avec les disques d'embrayage.

2. Embrayage multidisque selon la revendication 1, où chacune des dépressions (11, 12 ou a-f) a la configuration d'une encoche incurvée.

3. Embrayage multidisque selon la revendication 1 ou 2, où les dépressions (11, 12) sont des plusieurs encoches agencées à équidistance le long de l'entièreté de la périphérie de la plaque d'embrayage (7).

4. Embrayage multidisque selon l'une quelconque des revendications 1 à 3, où les éléments de frottement (10) comprennent plusieurs membres rectangulaires fixés sur les surfaces des disques d'embrayage (6) opposées aux plaques d'embrayage (7), séparément les uns des autres, à une distance prédéterminée de manière à éliminer l'huile entre le disque d'embrayage (6) et la plaque d'embrayage (7) par les espaces de séparation entre les membres de frottement (10).
